# EUROPEAN PATENT APPLICATION

(11) **EP 3 051 153 A1**
(43) Date of publication of application: **03.08.2016**
(21) Application number: 16153037.3
(22) Date of filing: 27.01.2016
(51) Int. Cl.: F16B 45/02

(54) **SAFETY CARABINER**

(30) Priority: 27.01.2015 CZ 20150048
(71) Applicant: Grivel S.r.l., 11013 Courmayeur (IT)
(72) Inventor: NEMEC, Miroslav, 69617 DOLNI BOJANOVICE (CZ)
(74) Representative: Fiussello, Francesco

(57) **Abstract**

A carabiner (100) is provided comprising a body (1) comprising a first end (1a) a second end (1b) and a back portion (1c). The carabiner comprises a gate (2), a first arresting component (3), a second arresting component (4) and elastic means (5). The gate (2) is connected to the body (1) through first connecting means (6), preferably a pin. The first arresting component (3) is connected to the body (1) through second connecting means (7). The second arresting component (4) is connected to the first arresting component (3) through third connecting means (8). The second arresting element (4) is connected to the gate (2) through fourth connecting means (9). The elastic means connect the gate (2) to one between the first connecting means (3) and the second connecting means (4) and are provided to pull one between the first arresting means (3) and the second connecting means toward the gate (2).

## Description

### FIELD OF THE INVENTION

The invention relates to a mechanical coupling mechanisms such as carabiners also called safety carabiner or snap-hooks. In particular, the invention relates to an improved carabiner and/or snap-hook system.

### BACKGROUND OF THE INVENTION

A carabiner also called snap hook or mountain carabiner or safety carabiner is a mechanical device used to link rope, slings and other climbing aids together. A carabiner is essentially a snap-hook used, for example, to attach a climber's body harness to the climbing rope. It is also used to link the climbing rope to anchors placed in or over the rock.

A typical carabiner is a palm sized, oblong or oval or "D" shaped ring of a lightweight, high strength material, usually a heat-treated aluminum alloy.

Carabiners, also called snap-hooks or releasable clamps, are used in a variety of applications for releasably coupling objects to one another. For example, a rock climber may use one or more carabiners to releasably secure a rope to a protection device during vertical ascension. Carabiners generally include an open frame, a hinged arm that serves as an inward opening gate or lock, and a releasable gate closure mechanism.

The gate or lock is spring loaded to remain normally closed. The normally closed, inward opening gate facilitates insertion of climbing aids, but it should avoid inadvertent removal. Objects are released from the carabiner after manually pushing open the gate.

The frame and the gate are configured to form a continuous inner region which can couple to one or more objects.

The gate or lock engages the frame to form the continuous inner region.

The releasable gate closure mechanism is configured to allow the gate to be selectively pivoted with respect to the frame to facilitate addition or removal of items from the continuous inner region.

The gate is pivoted in an open position by pushing the gate with a finger while holding the frame with the other fingers or the other hand.

The releasable gate closure mechanism simultaneously biases the gate toward a closed configuration with respect to the frame so as to maintain mechanical coupling of items within the continuous inner region.

A wide variety of frame, gate, and biasing systems exist for particular applications.

The most used gates are wire-gates or revolving gates or revolving hinges.

Wire-gate type carabiners represent a particular gate construction, biasing system, and gate-frame interface. Wire-gate carabiners utilize a substantially elongated, looped rigid wire member for the gate portion of the carabiner system.

In the wire-gate the lengthwise ends of the wire member gate are oppositely coupled to the frame such that the spring/rebound rigidity of the gate creates the automatic biasing mechanism.

As the gate is selectively pivoted about the frame coupling point, the torsional properties of the wire automatically generate a biasing force that mechanically urges the gate back toward the closed configuration.

The frame includes a gate interface region which generally includes a hook over which the loop of the gate is configured to extend while in the closed configuration.

Revolving gate or hinge carabiners generally include an hinge coupled to the frame through a mechanism comprising a stout compression that is housed within the gate. The spring urges the gate back toward the closed configuration.

The opening end of the gate incorporates a transverse pin that engages a hooked notch in the carabiner frame when the gate is completely closed. This arrangement allows the gate to carry part of the load imposed on the carabiner. Consequently, the carabiner is significantly stronger when the gate is closed.

A variety of specialized carabiner designs are configured to include specific mechanical characteristics that optimize particular functionalities.

A problem that generally occurs in the above described carabiners is the accidental opening of the gate due to the fact that the rope may get jammed into the gate if external forces are exerted for example when the climber falls. This can cause an accidental opening of the gate and can therefore cause serious accidents. Whenever the gate opens, even momentarily, there is a significant risk that a rope or other climbing aid will be inadvertently released.

Since carabiners are human safety device, each possible cause of malfunctioning can cause serious and even mortal accidents.

Different technical solutions have been improved in carabiners to avoid such problems.

A first known type of specialized carabiner is the so called screw carabiner. In the screw carabiner the gate integrates a screwable portion that can be screwed along the length of the gate, either toward the hinge, or toward the opening end directly onto a corresponding coupling portion of the frame.

The user can screw and unscrew the gate with one hand in order to lock or release the gate while holding the carabiner with the other hand.

The screw carabiner lowers the risks of an accidental opening of the carabiner, but it does not totally eliminate them because the rope can unscrew the carabiner. Moreover it requires that the user act with two hands, while in many situations the user cannot safely use the two hands contemporarily without taking some risk. The climber can be in the need of using only one hand to firmly hold the rock and use the carabiner with a single hand. The professional user can also have one tool in one hand and therefore can use the carabiner only with one hand.

Moreover the screw mechanism increases the weight of the carabiner and can become clogged with dirt, sand and ice.

As a possible alternative to the screw carabiner, it has been also been proposed to use the so called twist lock carabiner to include a spring lock that urges the gate to rotate in order to engage a corresponding coupling portion of the frame so that the gate locks automatically.

Unfortunately it has been verified that a rope and also bolts and hangers can become clogged in the locking system and/or can involuntary rotate the twisting gate and open the carabiner causing again serious accidents.

Moreover all known carabiners have to be opened with two hands and a carabiner that need two hands to be opened still presents the above safety issues.

There is the need in the market of a carabiner which avoids all the safety problems connected to a possible involuntary opening of the locking mechanism and allows a safe locking mechanism with a single hand and is possibly lightweight, easy to manufacture and to be maintained and that it cannot become clogged.

### SUMMARY OF THE INVENTION

According to the present invention the above mentioned problems are solved by a carabiner according to claim 1.

### BRIEF DESCRIPTION OF THE DRAWINGS

Figure 1 illustrates a frontal view of a carabiner according to a first embodiment of the present invention in a closed configuration;
Figure 2 illustrates a frontal view of a carabiner according to a first embodiment of the present invention in a open configuration;
Figure 3 illustrates a frontal view of a carabiner according to a second embodiment of the present invention in closed configuration;
Figure 4 illustrates a frontal view of a carabiner according to a second embodiment of the present invention in open configuration;
Figure 5 illustrates a frontal view of a carabiner according to a third embodiment of the present invention in closed configuration;
Figure 6 illustrates a frontal view of a carabiner according to a third embodiment of the present invention in open configuration;
Figure 7 illustrates a frontal view of a carabiner according to a fourth embodiment of the present invention in closed configuration;
Figure 8 illustrates a frontal view of a carabiner according to a fourth embodiment of the present invention in open configuration;
Figure 9 illustrates a frontal view of a carabiner according to a fifth embodiment of the present invention in a closed configuration;
Figure 10 illustrates a frontal view of the carabiner according to a fifth embodiment of the present invention in a open configuration.

### DETAILED DESCRIPTION OF THE INVENTION

As defined in the present invention a carabiner 100 is a mechanical device including a frame, at least a gate 2, and an inner region defined between the frame and the at least one gate 2.

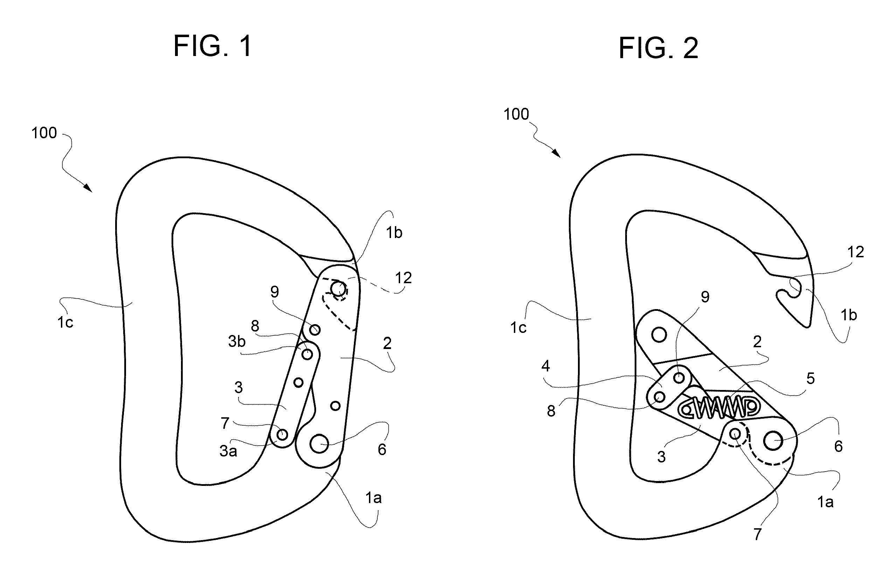

With reference to Fig. 1 and 2 in a first embodiment according to the present invention a carabiner 100 is provided.

Figures 1 and 2 illustrate a carabiner 100 or snap hook comprising a body 1, a gate 2, a first arresting component 3, a second arresting component 4, a spring 5 and a lock peg 12. The gate 2 may be opened or closed against the peg 12 to insert the rope.

The body 1 has approximately a C configuration and comprises a first end 1a, a second end 1b and a back portion 1c.

In figure 2 the gate 2 is open and can be closed by rotating the gate 2 and the first 3 and second 4 arresting element to form a closed ring forming a closed region as in figure 1. In the closed configuration the gate 2 closed against the lock peg 12.

The gate 2 is immovably connected to the body 1 by first connecting means 6 disposed at a first end 1a of the body 1, preferably the first connecting means are constituted by a pin 6.

In this first embodiment the first arresting component is bigger than the second arresting component, more preferably is at least twice as long as the second arresting component.

The first arresting component 3 is connected with the body 1 through second connecting means 7 positioned at the same end 1a, preferably a pin.

In the first embodiment the first arresting component is placed internally, i.e. toward the inner closed region of the carabiner 100 in the locked position and with respect to the body 1 of the carabiner 100 and to the gate 2. The second arresting 4 component is also placed internally with respect to the first arresting component 3 and to the gate 2.

The first arresting component 3 is connected to the second connecting component trough third connecting means 8 disposed preferably along the first arresting component 3, more preferably at about the half of the length of the first arresting component 3 and more preferably constituted by a pin.

The second connecting means 7 are disposed at one end of the first arresting component and the third connecting means 8 are disposed at the opposite end of the first arresting component.

The second arresting component 4 is connected to the gate 2 through fourth connecting means 9 disposed at one the end of the second arresting component 4.

The third connecting means 8 are disposed at one end of the second arresting component and the fourth connecting means 9 are disposed at the opposite end.

From the geometrical point of view, the gate 2, the first arresting component 3 and the second arresting component 4 form a triangle in which the first connecting means 6 and the second connecting means 7 form two vertices and at the same time form the first side of the triangle fixed to the carabiner 1, the third vertex of the triangle is the top of the gate 2 in which the peg 12 is placed.

The inner side of the gate 2 forms in its locked position the second side of the triangle from a geometrical point of view, which is marked with the two vertices formed by the second pin 7 and the peg 12, placed preferably on a line with the third connecting means 8 and the fourth connecting means 9 together with longitudinal axes of the first arresting component 3 and the second arresting component 4.

The first arresting component 3 is in the locked position on an inner side of the lock propped up and pushed against the gate 2.

At the same time the gate 2 forms from a geometrical point of view and on the opposite side of the safety lock, the third side of the triangle that connects the two of its vertices formed by the first connecting means 6 and the peg 12.

The integrated spring 5 draws closer the first arresting component 3 and the gate 2 and thus it helps to keep the whole lock closed and the carabiner in the locked position.

This arrangement comprises geometrically clearly defined vertices and sides of the triangle, which is fixed to the body 1 of the carabiner 100 and forms a lock which is fixed and firm in regard to the body 1, resistant towards forces acting in any point from any direction.

The carabiner is opened when the user pushes against the gate 2 and the first arresting component 3 towards the back 1c of the body 1 so that the user pulls the integrated spring 5 apart and release the propping between the first arresting component 3 and the gate 2.

The first arresting component 3 and the second arresting component 4 are rotated on the third connecting means 8 and on the fourth connecting means 9 so that they are pulled apart from the gate 2 and inside towards the back portion 1c of the body 1.

The lock constituted by gate 2, first 3 and second 4 arresting component and the relative connecting means 6, 7, 8, 9 is rotated on the first connecting means 6 and the second connecting means 7 towards the back 1c of the body 1 and the lock is thereby unlocked.

From a geometrical point of view by rotation of the third connecting means 8 and the fourth connecting means 9 and pulling apart the first arresting component 3 and the second arresting component 4 from the carabiner 2 the second side of the triangle is shortened. The vertex of the triangle formed by the peg 12 which is placed in the top of the gate 2 and moves inside towards the body 1 so that the safety lock is unlocked.

The carabiner 1 is closed and locked when the tension against the first arresting component 3 is released by the user. The tension of the integrated elastic means or spring 5 returns and all the parts of the lock return into the rest locked position.

In order to keep the full locking functionality of the lock it is preferable from constructional point of view that for the first arresting component 3, the second arresting component 4 and the gate 2, not to get in its full unlocked position under the lever of the above described first side of the triangle, i.e. under the connecting line of those pins that are part of the body 1 in the foot of unlocking and locking of the lock.

In the first embodiment of figure 1 and 2 the peg 12, the second 7, third 8 and fourth 9 connecting means are aligned in the locked position.

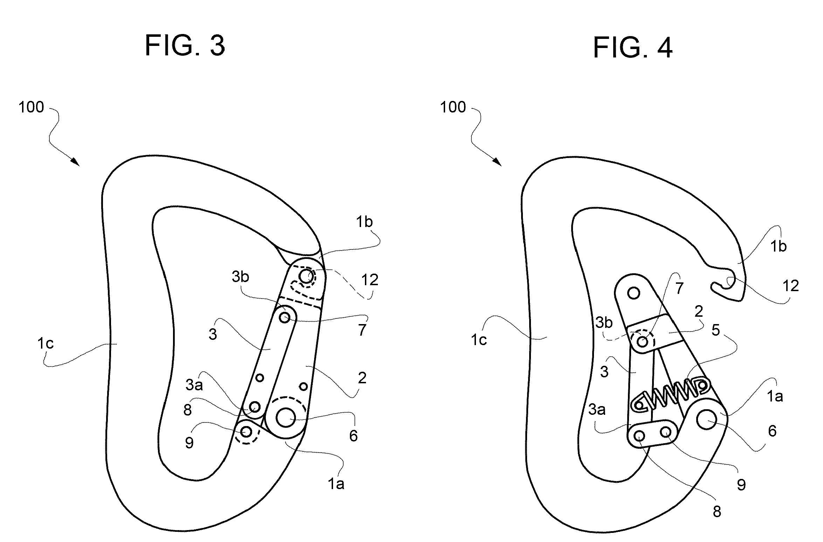

Figures 3 and 4 illustrate a second embodiment where a mutual change of position of the first arresting component 3 and the second arresting component 4 is made.

In particular, the first 3 and second 4 arresting component have changed position and the third connecting means 8 connecting the second arresting component 4 with the body 1 and the second connecting means 7 connecting the first arresting component 3 with the gate 2 replace the connecting means 8 connecting the second arresting 4 component with the gate 2 of the first embodiment.

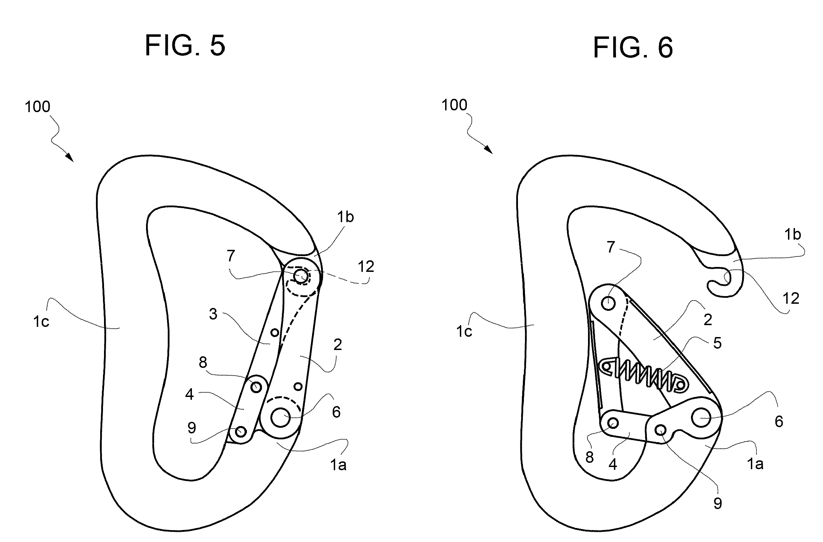

Figures 5 and 6 illustrate a third embodiment in which the first arresting component 3 is longer than in the first embodiment and the connecting means 9 are positioned approximately at the end of the gate 2 opposed to the end connected to the body 1 so that the fourth connecting means 9 are in the locked position in contact with the peg 12.

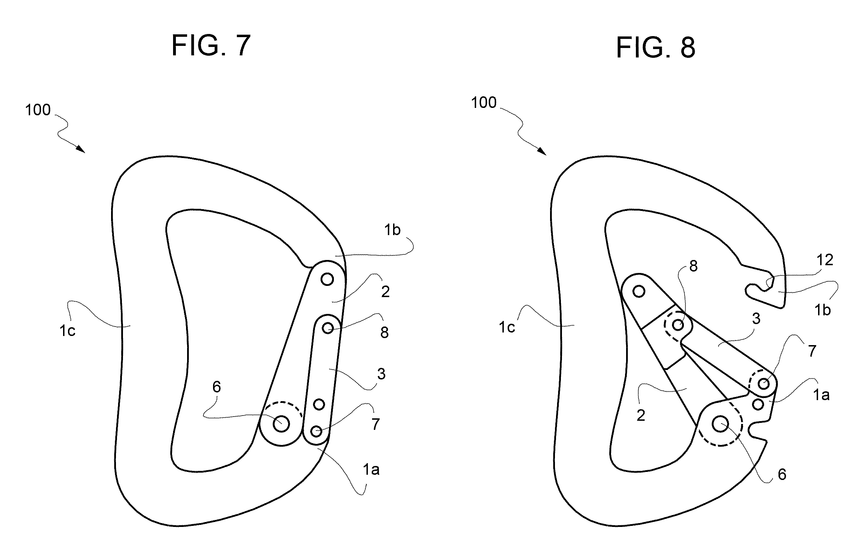

Figure 7 and 8 illustrate a fourth embodiment wherein the first arresting component 3 and the second arresting component 4 are placed, contrarily than in the case of the first embodiment, on the outer side of the lock and externally of the inner region of the body 1, whereas the gate 2 is placed on the inner side of the safety lock closer to the snap-hook body 1. In this embodiment it is necessary to replace the spring 5 connecting the first arresting component 3 with the gate 2 by a wound torsional spring 5 connecting the second arresting component 4 with the gate 2. In this embodiment the safety lock is unlocked when the user takes the first arresting component 3 and push toward the back 1c of the body 1, so that the lock is unlocked by rotation of the second arresting component 4 and by action of the wound torsional spring 5 inside towards the body 1.

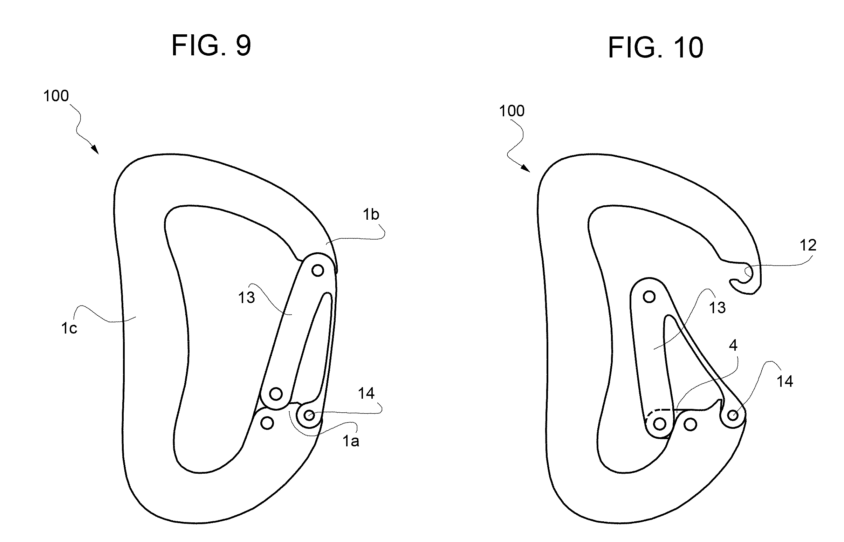

Figure 9 and 10 illustrate a fifth embodiment where the gate 2, the first component 3 and the spring 5 are integrated in one single elastic element 13.

The carabiner of the present invention are particularly indicated for the use in climbing, in building, in industry and in navy.

It should be noted that while different embodiments of the present invention have been above described with reference to different carabiner according to the embodiments described above, the teachings of the present invention are applicable also to other gate carabiners.

## Claims

1. Carabiner (100) comprising a body (1) comprising a first end (1a) a second end (1b) and a back portion (1c), said carabiner comprising a gate (2), a first arresting component (3), a second arresting component (4) and elastic means (5), wherein
the gate (2) is connected to the body (1) through first connecting means (6),
the first arresting component (3) is connected to the body (1) or to the second arresting component through second connecting means (7) and third connecting means (8),
the second arresting component (4) is connected to one of the first arresting component (3) or to the gate (2) through third connecting means (8) and fourth connecting means (9),
said elastic means connect the gate (2) to one between the first connecting means (3) and the second connecting means (4),
said elastic means (5) are provided to pull one between the first arresting means (3) and the second connecting means toward the gate (2).

2. Carabiner according to claim 1 **characterized in that** said first connecting means (6), second connecting means (7), third connecting means (8), fourth connecting means (9) are preferably pins.

3. Carabiner according to claims 1 or 2, **characterized in that** said elastic means (5) are a spring.

4. Carabiner according to any of the preceding claims, **characterized in that** said first connecting means (6) are disposed at said first end (1a) of said body (1).

5. Carabiner according to any of the preceding claims, **characterized in that** said second connecting means (7) are disposed at said first end (1a) of said body (1) and at a first end (3a) of the first arresting component (3).

6. Carabiner according to any of the preceding claims, **characterized in that** said fourth connecting means (9) are disposed at a second end (3b) of the first arresting element (3) opposed to the first end (3a).

7. Carabiner according to any of the preceding claims, **characterized in that** the second arresting component (4) is connected to one of the first arresting component (3) through third connecting means (8), and the second arresting element (4) is connected to the gate (2) through fourth connecting means (9).

8. Carabiner according to any of the preceding claims **characterized in that** the gate (2), the first arresting element (3) and the elastic means (5) are integrated in one integrated single element (13).

9. Carabiner according to any of the preceding claims **characterized in that**
- said integrated single element (13) is connected to the body (1) trough fifth connecting means (14);
- the second arresting component (4) is connected to the body (1) trough sixth connecting means (15).

10. Carabiner (100) comprising a safety lock with arresting components comprising a gate (2), a first arresting component (3), a second arresting component (4) and a spring (5), whereas the lock is equipped with the pin (6) connecting the snap-hook gate (2) with the body (1), the pin (7) connecting the first arresting component (3) with the body (1), the pin (8) connecting the first arresting component (3) with the second arresting component (4) and the pin (9) connecting the second arresting component (4) with the gate (2), whereas the spring (5) connects the first arresting component (3) with gate (2) and the gate (2) is equipped with the peg (12) connecting the gate (2) with the body (1).

11. Carabiner (100) comprising a safety lock with arresting components according to the claim 10, **characterized by** the fact that the gate (2), the first arresting component (3) and the spring (5) are replaced by an integrated element (13), whereas the lock is equipped with the pin (14) connecting the snap-hook integrated element (13) with the body (1), the pin (10) connecting the second arresting component (4) with the body (1) and the pin (15) connecting the integrated element (13) with the second arresting component (4), whereas the integrated element (13) is equipped with the lock peg (12) connecting the integrated element (13) with the body.
